# EUROPÄISCHE PATENTSCHRIFT

(11) **EP 2 435 203 B1**
(45) Veröffentlichungstag und Bekanntmachung des Hinweises auf die Patenterteilung: **18.02.2015**
(21) Anmeldenummer: 10744672.6
(22) Anmeldetag: 31.05.2010
(51) Int. Cl.: B23B 41/02, B23C 3/00

(54) **WERKZEUGMASCHINE**
MACHINE TOOL
MACHINE-OUTIL

(30) Priorität: 30.05.2009 DE 102009023519
(43) Veröffentlichungstag der Anmeldung: 04.04.2012
(73) Patentinhaber: Samag Saalfelder Werkzeugmaschinen GmbH, 07318 Saalfeld (Saale) (DE)
(72) Erfinder: MECKE, Andreas, 22885 Barsbüttel (DE); LENZ, Rainer, 22145 Hamburg (DE)
(74) Vertreter: Behrendt, Arne
(86) Internationale Anmeldenummer: PCT/EP2010/003289
(87) Internationale Veröffentlichungsnummer: WO 2010/139440

(56) Entgegenhaltungen:
- EP-A1- 0 699 493
- EP-A2- 0 280 862
- DE-C1- 4 318 830
- JP-A- 62 264 813
- JP-A- 2005 342 829

## Beschreibung

Die Erfindung betrifft eine Werkzeugmaschine zum mechanischen Bearbeiten von Werkstücken durch Tiefbohren, Fräsen, Bohren, Gewindeschneiden, Reiben oder dergleichen, mit einem in Bezug auf das eingespannte Werkstück beweglichen Bearbeitungsbalken, an welchem ein in Richtung auf das Werkstück weggesteuerter verschiebbarer Spindelstock geführt ist, dessen drehend angetriebene und in einer nicht drehbaren Spindelhülse gelagerte Spindelwelle an ihrem vorderen Ende mit einer Spannvorrichtung zum Einspannen von auswechselbaren Werkzeugen versehen ist, wobei dem vorderen Ende des Bearbeitungsbalkens eine Späneschleuse und eine abnehmbare Anbohrbuchse zugeordnet ist.

Eine derartige Werkzeugmaschine ist beispielsweise aus der EP 0 699 493 B1 bekannt. Diese Werkzeugmaschine hat den Vorteil, dass sie sowohl zum Tiefbohren als auch zum Fräsen, Bohren, Gewindeschneiden, Reiben oder dergleichen geeignet ist. Diese Doppelfunktion wird im Wesentlichen dadurch ermöglicht, dass die für das Tiefbohren benötigte Anbohrbuchse mit wenigen Handgriffen abgenommen werden kann, so dass die Spindelhülse mit der darin gelagerten Spindelwelle mit Spannvorrichtung ganz oder teilweise durch die Späneschleuse hindurchtauchen kann, wodurch die Spannvorrichtung für das einzuspannende Fräswerkzeug näher an den Eingriffsort des Fräswerkzeugs am Werkstück herangeführt wird. Zu diesem Zweck hat die Späneschleuse Durchtrittsöffnungen, deren Durchtrittsquerschnitt größer ist als die äußeren Abmessungen der Spindelhülse.

Die vorbekannte Vorrichtung hat allerdings noch den Nachteil, dass die Spindelhülse ausschließlich am Spindelstock abgestützt ist, wodurch es bei allen Arbeitsvorgängen, bei denen ohne Verwendung von Späneschleuse und Anbohrbuchse gearbeitet wird, zu Schwingungen an der Spindelhülse mitsamt Spindelwelle kommen kann und Maßungenauigkeiten dann nicht zu vermeiden sind.

Es ist deshalb Aufgabe der Erfindung, die Werkzeugmaschine der eingangs genannten Art dahingehend weiterzubilden, dass Querkräfte besser aufgenommen und Schwingungen und daraus resultierende Maßungenauigkeiten vermieden werden.

Zur Lösung dieser Aufgabe schlägt die Erfindung ausgehend von der Werkzeugmaschine der eingangs genannten Art vor, dass am vorderen Ende des Bearbeitungsbalkens ein Stützlager für die Spindelhülse vorgesehen ist, welches an seiner Innenseite mit Stützflächen für die Spindelhülse versehen ist, die an ihrer Außenseite mit dazu passenden Gegenstützflächen zur zentrierenden Abstützung in dem Stützlager versehen ist.

Nach der Lehre der Erfindung wird die Spindelhülse bei allen Arbeitsgängen, die nicht Tiefbohren sind, einerseits am Spindelstock und andererseits im Stützlager am vorderen Ende des Bearbeitungsbalkens zentrisch abgestützt, so dass Querkräfte besser aufgenommen und Schwingbewegungen relativ zum Bearbeitungsbalken weitestgehend ausgeschlossen werden. Da außerdem das vordere Ende des Bearbeitungsbalkens nach Abbau der Späneschleusenpatrone sehr nahe an das Werkstück herangeschoben werden kann, ergibt sich ein denkbar geringer Abstand zwischen der vorderen Abstützung der Spindelhülse und dem Eingriffsort des Werkzeugs im Werkstück, so dass beispielsweise beim Fräsen außerordentlich maßgenau gearbeitet werden kann.

Zweckmäßig sind die Stützflächen des Stützlagers einerseits und die dazu passenden Gegenstützflächen der Spindelhülse andererseits konisch mit in der Spindelachse verlaufender Konusachse ausgebildet. Bei dieser Ausgestaltung und Anordnung der Stützflächen und Gegenstützflächen wird die angestrebte zentrierende Abstützung allein dadurch erreicht, dass die Spindelhülse mit Hilfe des sie tragenden Spindelstocks axial in das am vorderen Ende des Bearbeitungsbalkens angeordnete Stützlager hineingefahren wird und dort in Abhängigkeit von der aufgewendeten axialen Vorschubkraft zentriert wird. Dabei können die Vorschubkraft und damit die Intensität der Zentrierung z. B. durch die Funktion "Fahren gegen Festanschlag" des Spindelstockantriebs beliebig eingestellt werden.

Eine zweckmäßige Weiterbildung der Erfindung sieht vor, dass das Stützlager in einem Haltewinkel angeordnet ist, der in Richtung der Spindelachse gegen Federkraft verschiebbar am vorderen Ende des Bearbeitungsbalkens gelagert ist. In diesem Fall kann die Intensität der Zentrierung über eine entsprechende Länge des Federweges eingestellt werden, was mit der exakt wegabhängigen Verschiebesteuerung des Spindelstockantriebs ohne weiteres möglich ist.

Eine besonders bevorzugte Ausführungsform der Erfindung sieht vor, dass das Stützlager in einem Haltewinkel angeordnet ist, der in Richtung der Spindelachse druckmittelbetätigt verschiebbar am vorderen Ende des Bearbeitungsbalkens gelagert ist. Bei dieser Ausführungsform der Erfindung kann das Stützlager relativ zum feststehenden Spindelstock verschoben werden und auf diese Weise die jeweils gewünschte axiale Anpresskraft und Zentrierung eingestellt werden. Für die Druckmittelbetätigung kommen sowohl druckluftbetätigte Stellzylinder als auch hydraulisch betätigte Stellzylinder in Frage. Ein solches druckmittelbetätigtes Verstellsystem hat zusätzlich eine dämpfende Wirkung auf die Abstützung des vorderen Endes der Spindelhülse, wodurch zusätzlich die Entstehung von schädlichen Schwingungen unterdrückt werden kann.

Eine alternative Ausführungsform des Stützsystems für die Spindelhülse sieht vor, dass die Stützflächen am inneren Umfang des Aufnahmelagers Teile einer radial auf die Gegenstützfläche der Spindelhülse einwirkenden Spannvorrichtung sind. Hierfür sind insbesondere sogenannte Ringspannvorrichtungen oder Dehnspannelemente geeignet. In diesem Fall werden die Abstützkräfte nicht durch axiale Relativbewegungen zwischen Stützlager und Spindelhülse erzeugt, sondern werden ausgehend vom Stützlager radial nach innen auf den Außenumfang der Spindelhülse ausgeübt, deren Außenumfang in diesem Fall auch zylindrisch oder prismatisch ausgebildet sein kann.

Um einen schnellen Ein- und Ausbau der Späneschleuse inklusive Anbohrbuchse und Dichtsystem zu ermöglichen, ist schließlich vorgesehen, dass die Späneschleuse mit darin angeordneter Anbohrbuchse und Dichtsystem als abnehmbares patronenförmiges Gehäuse ausgeführt ist, welches von der der Spindelhülse abgewandten Seite her teilweise in das Stützlager einschiebbar ist und dort mit einem Schnellverschluss arretierbar ist. Als Schnellverschluss für die Festlegung dieses abnehmbaren patronenförmigen Gehäuses kommt beispielsweise ein Bajonettverschluss, ein Klemmsatz oder dergleichen in Frage.

Ein Ausführungsbeispiel der erfindung wird im Folgenden anhand der Zeichnung näher erläutert. Es zeigen:
- Fig. 1:: Schematisch eine Draufsicht auf eine Werkzeugmaschine gemäß der Erfindung beim Tiefbohren;
- Fig. 2:: die in Figur 1 dargestellte Werkzeugmaschine beim Fräsen.

In der Zeichnung ist ein Maschinenständer einer Werkzeugmaschine mit dem Bezugszeichen 1 bezeichnet. An diesem Maschinenständer 1 ist mit Hilfe von Führungseinrichtungen 2 ein Bearbeitungsbalken 3 in vertikaler Richtung, d. h. senkrecht zur Zeichenebene, verschiebbar gelagert. Außerdem kann der Bearbeitungsbalken 3 horizontal in Richtung des Doppelpfeils 4 verschoben werden.

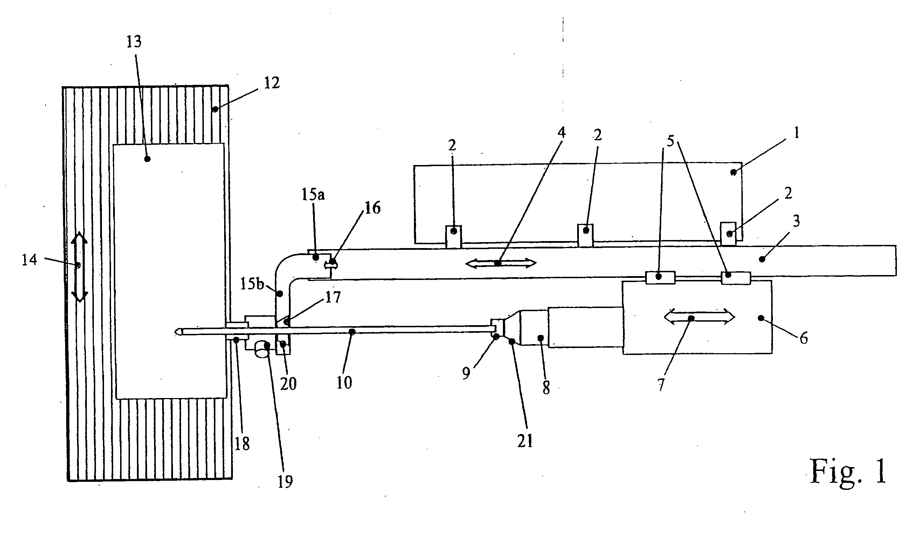

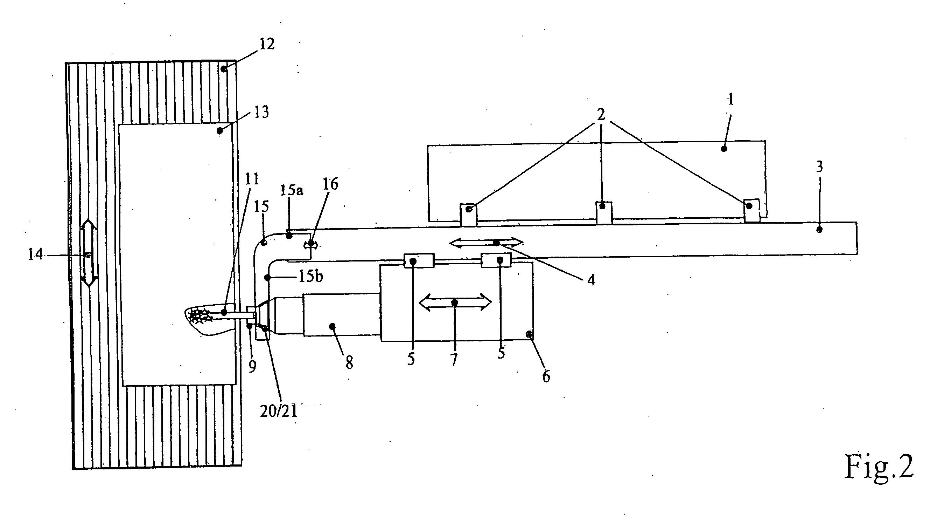

An dem Bearbeitungsbalken 3 ist mit Hilfe von Führungseinrichtungen 5 ein in dessen in dessen Längsrichtung verschiebbarer Spindelstock 6 gelagert. Diese Verschiebbarkeit, die exakt weggesteuert erfolgt, ist in der Zeichnung durch den Doppelpfeil 7 angedeutet. Der Spindelstock 6 ist an seinem vorderen Ende mit einer unverdrehbaren Spindelhülse 8 versehen, in welcher eine von dem Spindelstock 6 drehend angetriebene drehbare Spindelwelle 9 gelagert ist, die am vorderen Ende der Spindelhülse 8 austritt und dort über eine Spannvorrichtung mit einem Werkzeug verbunden werden kann, welches z. B. ein Tieflochbohrer 10 (vgl. Figur 1) oder ein Fräswerkzeug 11 (vgl. Figur 2) oder ein anderes geeignetes Bearbeitungswerkzeug sein kann.

Dem vorderen Ende des Bearbeitungsbalkens 3 gegenüberliegend ist ein Aufspanntisch 12 angeordnet, auf welchem ein zu bearbeitendes Werkstück 13 mit Hilfe von nicht dargestellten Spanneinrichtungen aufgespannt ist. Der Aufspanntisch 12 selbst ist zusammen mit dem darauf aufgespannten Werkstück 13 in Richtung des Doppelpfeils 14 verschiebbar.

Erfindungsgemäß ist der Bearbeitungsbalken 3 an seinem dem Werkstück 13 zugewandten Ende mit einem Haltewinkel 15 versehen, dessen erster Schenkel15a kurzhubig verschiebbar am vorderen Ende des Bearbeitungsbalkens 3 gelagert ist. Die kurzhubige Verschiebung dieses ersten Winkels 15a des Haltewinkels 15 erfolgt durch nicht im einzeln dargestellte, doppelt wirkende Druckmittelzylinder in Richtung des Doppelpfeils 16. Diese Druckmittelzylinder können hydraulisch oder pneumatisch arbeiten.

Der zweite Schenkel 15b des Haltewinkels 15 ist mit einem Stützlager 17 versehen, in welches die Spindelwelle 9 und das vordere Ende der Spindelhülse 8 eingeschoben werden können. Weiterhin ist der zweite Halteschenkel 15b des Haltewinkels 15 an seiner dem Werkstück 13 zugewandten Seite mit Befestigungseinrichtungen für eine mit einer Anbohrbuchse 18 versehene Späneschleuse 19 versehen. Die mit der Späneschleuse 19 verbundene Anbohrbuchse 18 dient dazu, während des Tiefbohrens den Tieflochbohrer 10 in Position zu halten und axial zu führen. Nach Abschluss der Tiefbohrarbeiten können die Späneschleuse 19 und die mit damit verbundene Anbohrbuchse 18, die mitsamt einem der Späneschleuse zugeordneten Dichtsystem gemeinsam in einem patronenförmigen Gehäuse angeordnet sind, mit wenigen Handgriffen von dem zweiten Schenkel 15b des Haltewinkels 15 abgenommen werden (vgl. Figur 2). Das Stützlager 17 im zweiten Schenkel 15b des Haltewinkels 15 ist an seinem inneren Umfang mit einer konischen Stützfläche 20 versehen, die mit einer ebenfalls konischen Gegenstützfläche 21 am äußeren Umfang der Spindelhülse 8 korrespondiert. Im Übrigen ist das Stützlager 17 in dem Haltewinkel 15 so bemessen, dass die Spindelwelle 9 und deren Spannvorrichtung frei hindurchtreten können, bis die Gegenstützfläche 21 der Spindelhülse 8 an der Stützfläche 20 des Stützlagers 17 anliegt (vgl. Figur 2).

Wie aus Figur 1 ersichtlich ist, durchsetzt beim Tiefbohren der Tieflochbohrer 10 das Stützlager 17, die Späneschleuse 19 und die Anbohrbuchse 18, welche den Tieflochbohrer 10 unmittelbar an dem Werkstück 13 anliegend führt und hält.

Für das Fräsen oder andere Bearbeitungsvorgänge wird, wie aus Figur 2 ersichtlich, das patronenförmige Gehäuse der Späneschleuse 19 mit samt der Anbohrbuchse 18 abgenommen und der Spindelstock 6 vorgeschoben, bis dessen Spindelhülse 8 mit ihren konischen Gegenstützfläche 21 zur Anlage an der ebenfalls konischen Stützfläche 20 des Stützlagers 17 kommt. Dabei wird allein schon durch die Vorschubkraft des Spindelstocks 6 das vordere Ende der Spindelhülse 8 in dem Stützlager 17 zentriert und fixiert.

Diese Intensität dieser Zentrierung hängt von der axialen Vorschubkraft ab, die durch die Funktion "Fahren gegen Festanschlag" des Spindelstockantriebs beliebig eingestellt werden kann.

Diese Zentrierung und Fixierung kann auch dadurch intensiviert werden, dass der Spindelstock 6 in der eingenommenen Position an dem Bearbeitungsbalken 3 festgebremst wird und der Haltewinkel 15 am vorderen Ende des Bearbeitungsbalkens 3 druckmittelbetätigt, d. h. hydraulisch oder pneumatisch, in Richtung auf den festgebremsten Spindelstock 6 verschoben wird. Das Fräswerkzeug kann zu einem beliebigen Zeitpunkt, d. h. vor dem Festspannen oder nach dem Festspannen der Spindelhülse 8 mit Hilfe der Spannvorrichtung mit der Spindelwelle 9 verbunden werden. Für die Fräsarbeit selbst wird der Bearbeitungsbalken 4 mitsamt der darin eingespannten Spindelhülse 8 so nahe wie möglich an das zu bearbeitende Werkstück 13 herangefahren. Letzteres ist insofern besonders gut möglich, als die Späneschleuse 19 und die Anbohrbuchse 18 entfernt sind.

Alternativ zum dargestellten Ausführungsbeispiels ist es auch möglich, am inneren Umfang des Stützlagers eine Spannvorrichtung vorzusehen, die Stützflächen aufweist, die auf entsprechende Gegenstützflächen am Außenumfang der Spindelhülse einwirken. In diesem Fall brauchen die Stützflächen und die Gegenstützflächen natürlich nicht konisch ausgebildet zu sein, sondern können auch eine andere geometrische Gestalt haben, z. B. zylindrisch oder prismatisch.

An die Stelle der den Haltewinkel 15 verschiebenden druckmittelbetätigten Stellorgane können ggf. auch Federn treten. In diesem Fall bestimmt sich die axiale Anpresskraft und damit die Zentrierung durch den Weg, um welchen diese Federn in Längsrichtung der Spindelachse zusammengepresst werden. Eine exakte Einstellung dieser Federkraft ist in diesem Fall mit Hilfe des exakt wegabhängig steuerbaren Spindelstockantriebs möglich.

### Bezugszeichenliste

- 1: Maschinenständer
- 2: Führungseinrichtungen
- 3: Bearbeitungsbalken
- 4: horizontale Verschieberichtung des Bearbeitungsbalkens
- 8: Spindelhülse
- 9: Spindelwelle
- 10: Tieflochbohrer
- 11: Fräswerkzeug
- 12: Aufspanntisch
- 13: Werkstück
- 14: Verschieberichtung des Aufspanntisches
- 15: Haltewinkel
- 15a: erster Schenkel des Haltewinkels
- 15b: zweiter Schenkel des Haltewinkels
- 16: Verschieberichtung des Haltewinkels
- 17: Stützlager
- 18: Anbohrbuchse
- 19: Späneschleuse mit Dichtsystem
- 20: konische Stützfläche
- 21: konische Gegenstützfläche

## Patentansprüche

1. Werkzeugmaschine zum mechanischen Bearbeiten von Werkstücken durch Tiefbohren, Fräsen, Bohren, Gewindeschneiden, Reiben oder dergleichen, mit einem in Bezug auf das eingespannte Werkstück (13) beweglichen Bearbeitungsbalken (3), an welchem ein in Richtung auf das Werkstück (13) weggesteuerter verschiebbarer Spindelstock (6) geführt ist, dessen drehend angetriebene und in einer nicht drehbaren Spindelhülse (8) gelagerte Spindelwelle (9) an ihrem vorderen Ende mit einer Spannvorrichtung zum Einspannen von auswechselbaren Werkzeugen (10, 11) versehen ist, wobei dem vorderen Ende des Bearbeitungsbalkens (3) eine Späneschleuse (19) und eine abnehmbare Anbohrbuche (18) zugeordnet ist, **dadurch gekennzeichnet, dass** am vorderen Ende des Bearbeitungsbalkens (3) ein Stützlager (17) für die Spindelhülse (8) vorgesehen ist, welches an seiner Innenseite mit Stützflächen (20) für die Spindelhülse (8) versehen ist, die an ihrer Außenseite mit dazu passenden Gegenstützflächen (21) zur zentrierenden Abstützung in dem Stützlager (17) versehen sind.

2. Werkzeugmaschine nach Anspruch 1, **dadurch gekennzeichnet, dass** die Stützflächen (20) des Stützlagers (17) und die dazu passenden Gegenstützflächen (21) der Spindelhülse (8) konisch mit in der Spindelachse verlaufender Konusachse ausgebildet sind.

3. Werkzeugmaschine nach den Ansprüchen 1 und 2, **dadurch gekennzeichnet, dass** die Vorschubkraft des Verschiebeantriebs des Spindelstocks (6) und damit die Intensität der Zentrierung der Spindelhülse (8) in dem Stützlager (17) durch die Funktion "Fahren gegen Festanschlag" einstellbar ist.

4. Werkzeugmaschine nach den Ansprüchen 1 und 2, **dadurch gekennzeichnet, dass** das Stützlager (17) in einem Haltewinkel (15) angeordnet ist, der in Richtung der Spindelachse gegen Federkraft verschiebbar am vorderen Ende des Bearbeitungsbalkens (3) gelagert ist.

5. Werkzeugmaschine nach den Ansprüchen 1 und 2, **dadurch gekennzeichnet, dass** das Stützlager (17) in einem Haltewinkel.(15) angeordnet ist, der in Richtung der Spindelachse druckmittelbetätigt verschiebbar am vorderen Ende des Bearbeitungsbalkens (3) gelagert ist.

6. Werkzeugmaschine nach Anspruch 1, **dadurch gekennzeichnet, dass** die Stützflächen am inneren Umfang des Stützlagers Teile einer radial auf die Gegenstützflächen der Spindelhülse einwirkenden Spannvorrichtung sind.

7. Werkzeugmaschine nach einem oder mehreren der Ansprüche 1 bis 6, **dadurch gekennzeichnet, dass** die Späneschleuse (19) mit darin angeordneter Anbohrbuchse (18) und Dichtsystem als abnehmbares, patronenförmiges Gehäuse ausgeführt ist, welches von der Spindelhülse (8) abgewandten Seite her teilweise in das Stützlager (17) einschiebbar ist und dort mit einem Schnellverschluss arretierbar ist.

## Claims

1. A machine tool for machining workpieces by deep drilling, milling, drilling, thread cutting, reaming or the like, comprising a machining bar (3) which is moveable in relation to the clamped workpiece (13) and on which is guided a headstock (6) which is displaceable in travel-controlled relationship in a direction towards the workpiece (13) and whose rotatingly driven spindle shaft (9) which is mounted in a non-rotatable spindle sleeve (8) is provided at its front end with a clamping device for clamping interchangeable tools (10, 11), wherein associated with the front end of the machining bar (3) are a chip separator (19) and a removable boring bush (18), **characterised in that** provided at the front end of the machining bar (3) is a support bearing (17) for the spindle sleeve (8), which support bearing is provided at its inside with support surfaces (20) for the spindle sleeve (8), which are provided at their outside with matching counterpart support surfaces (21) for centring support in the support bearing (17).

2. A machine tool according to claim 1 **characterised in that** the support surfaces (20) of the support bearing (17) and the matching counterpart support surfaces (21) of the spindle sleeve (8) are conical with the cone axis extending on the spindle axis.

3. A machine tool according to claims 1 and 2 **characterised in that** the advance force of the displacement drive of the headstock (6) and therewith the intensity of centring of the spindle sleeve (8) in the support bearing (17) can be adjusted by the function of "travel to fixed abutment".

4. A machine tool according to claims 1 and 2 **characterised in that** the support bearing (17) is arranged in an angular holder (15) which is mounted to the front end of the machining bar (3) displaceably against a spring force in the direction of the spindle axis.

5. A machine tool according to claims 1 and 2 **characterised in that** the support bearing (17) is arranged in an angular holder (15) which is mounted to the front end of the machining bar (3) displaceably with pressure means actuation in the direction of the spindle axis.

6. A machine tool according to claim 1 **characterised in that** the support surfaces at the inner periphery of the support bearing are parts of a clamping device acting radially on the counterpart support surfaces of the spindle sleeve.

7. A machine tool according to one or more of claims 1 to 6 **characterised in that** the chip separator (19) with boring bush (18) arranged therein and sealing system is in the form of a removable cartridge-like housing which can be inserted partially into the support bearing (17) from the side facing away from the spindle sleeve (8) and can be arrested there by a quick-action locking means.

## Revendications

1. Machine-outil pour l'usinage mécanique de pièces par alésage profond, fraisage, alésage, taraudage, abrasion ou autre, avec une barre d'usinage (3) mobile par rapport à la pièce (13) serrée, sur laquelle est guidée une tête porte-broche (6) coulissante de manière contrôlée en direction de la pièce (13), dont l'arbre porte-broche (9), entraîné en rotation et logé dans une douille de broche (8) non rotative, est muni, à son extrémité avant, d'un dispositif de serrage pour le serrage d'outils (10, 11) interchangeables, un sas à copeaux (19) et une douille de perçage (3) étant prévus à l'extrémité avant de la barre d'usinage (3), **caractérisée en ce que**, à l'extrémité avant de la barre d'usinage (3), se trouve un palier d'appui (17) pour la douille de broche (8), qui est muni, à l'intérieur, de surfaces d'appui (20) pour la douille de broche (8), qui sont munies à l'extérieur, de surfaces de contre-appui (21) pour un appui centré dans le palier d'appui (17).

2. Machine-outil selon la revendication 1, **caractérisée en ce que** les surfaces d'appui (20) du palier d'appui (17) et les surfaces de contre-appui (21) adaptées de la douille de broche (8) sont conçues de manière conique avec un axe de cône passant dans l'axe de broche.

3. Machine-outil selon les revendications 1 et 2, **caractérisée en ce que** la force d'avance de l'entraînement d'avance de la tête porte-broche (6) et donc l'intensité du centrage de la douille de broche (8) peut être réglée dans le palier d'appui (17) par la fonction « déplacement en direction d'une butée fixe ».

4. Machine-outil selon les revendications 1 et 2, **caractérisée en ce que** le palier d'appui (17) est disposé dans un angle de maintien (15) qui est logé de manière coulissante en direction de l'axe de broche contre une force élastique à l'extrémité avant de la barre d'usinage (3) .

5. Machine-outil selon les revendications 1 et 2, **caractérisée en ce que** le palier d'appui (17) est disposé dans un angle de maintien (15) qui est logé de manière coulissante en direction de l'axe de broche sous l'effet d'un fluide sous pression à l'extrémité avant de la barre d'usinage (3).

6. Machine-outil selon la revendication 1, **caractérisée en ce que** les surfaces d'appui au niveau de la circonférence interne du palier d'appui sont les parties d'un dispositif de serrage agissant radialement sur les surfaces de contre-appui de la douille de broche.

7. Machine-outil selon l'une ou plusieurs des revendications 1 à 6, **caractérisée en ce que** le sas à copeaux (19) est conçu avec une douille d'alésage (18) disposée à l'intérieur et un système d'étanchéité conçu comme un boîtier amovible en forme de cartouche, qui peut coulisser du côté opposé à la douille de broche (8) partiellement vers le palier d'appui (17) et qui peut y être bloqué à l'aide d'une fermeture rapide.
